(19) Europäisches Patentamt / European Patent Office / Office européen des brevets

(11) **EP 3 273 360 A1**

(12) **DEMANDE DE BREVET EUROPEEN**

(43) Date de publication:
**24.01.2018 Bulletin 2018/04**

(51) Int Cl.:
*G06F 17/17* $^{(2006.01)}$   *G01N 21/00* $^{(2006.01)}$

(21) Numéro de dépôt: **17181597.0**

(22) Date de dépôt: **17.07.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **18.07.2016 FR 1656828**

(71) Demandeur: **Commissariat à l'Energie Atomique et aux Energies Alternatives 75015 Paris (FR)**

(72) Inventeurs:
• **LICITRA, Christophe**
  **38100 GRENOBLE (FR)**
• **HAZART, Jérôme**
  **38320 EYBENS (FR)**

(74) Mandataire: **Cabinet Camus Lebkiri 25 rue de Maubeuge 75009 Paris (FR)**

(54) **PROCÉDÉ DE CARACTÉRISATION PARAMÉTRIQUE**

(57)     La présente invention concerne un un procédé de caractérisation paramétrique d'un échantillon comportant, pour une valeur d'une grandeur expérimentale donnée, les étapes suivantes :
- une première étape de mesure de la réponse expérimentale de l'échantillon ;
- une deuxième étape de détermination d'une réponse théorique de la réponse de l'échantillon en ajustant au moins un paramètre de l'échantillon associé à une modélisation de la mesure de façon à rendre l'écart entre la réponse expérimentale et la réponse théorique inférieur ou égal à un seuil donné, une valeur initiale étant affectée au paramètre avant l'ajustement ;
les première et deuxième étapes étant répétées pour une pluralité de valeurs de la grandeur expérimentale, le procédé étant caractérisé en ce que, au-delà de la deuxième répétition des première et deuxième étapes, pour une valeur d'une grandeur expérimentale donnée, la valeur initiale du paramètre à ajuster est déterminée à partir d'au moins deux valeurs ajustées dudit paramètre obtenues lors des précédentes premières et deuxièmes étapes.

Fig. 1

EP 3 273 360 A1

**(Cont. page suivante)**

**Fig. 11**

**Description**

La présente invention concerne un procédé de caractérisation paramétrique. En d'autres termes, le procédé selon l'invention concerne les techniques de caractérisation permettant de remonter, via une modélisation, à certaines caractéristiques de l'échantillon à caractériser et s'applique notamment à la mise en oeuvre de ces techniques lors de mesures multiples, par exemple en temps réel, sur un même échantillon. L'invention s'applique notamment mais de façon non limitative à la caractérisation par ellipsométrie.

En microélectronique, les progrès de la technologie s'accompagnent de besoins en instruments de caractérisation. Pour chaque noeud technologique, les outils de métrologie doivent être de plus en plus performants en étant capables d'assurer le contrôle des dispositifs fabriqués.

De façon connue, certains procédés de caractérisation permettent de remonter via une modélisation (i.e. via un fit ou un ajustement des données expérimentales sur un modèle), à certaines propriétés de l'échantillon à caractériser telles que par exemple l'épaisseur ou l'indice optique. C'est par exemple le cas de l'ellipsométrie.

En outre, ces mêmes propriétés sont susceptibles de varier en fonction de conditions expérimentales imposées telles que par exemple, le temps, la température, l'éclairement ou une contrainte quelconque appliquée à l'échantillon. Des mesures multiples avec un même procédé de caractérisation peuvent ainsi être réalisées en fonction de l'évolution d'une ou plusieurs conditions expérimentales.

A titre illustratif, au cours d'une expérience, les mesures multiples peuvent concerner des mesures de films minces en temps réel lors d'une étape de croissance ou de gravure qui font varier principalement l'épaisseur du ou des films au cours du temps. Sont également concernées les mesures en environnement contrôlé comme par exemple la température ou la pression d'un gaz qui peuvent faire varier à la fois les indices optiques et les épaisseurs de films en fonction des variations de conditions (i.e. la température ou la pression).

A chaque point de l'expérience (i.e. pour une condition expérimentale donnée), une connaissance a priori de ces propriétés est en général nécessaire pour initier le modèle en chaque point de l'expérience afin qu'il converge dans de bonnes conditions.

Cette connaissance a priori présente toutefois certains inconvénients.

En effet, lors de certaines expériences, des variations trop fortes des propriétés de l'échantillon peuvent nuire à la bonne convergence des algorithmes de modélisation.

Nous allons illustrer cette difficulté dans le cas de l'ellipsométrie, étant entendu que ce problème se pose dans toute technique de caractérisation nécessitant la modélisation de données.

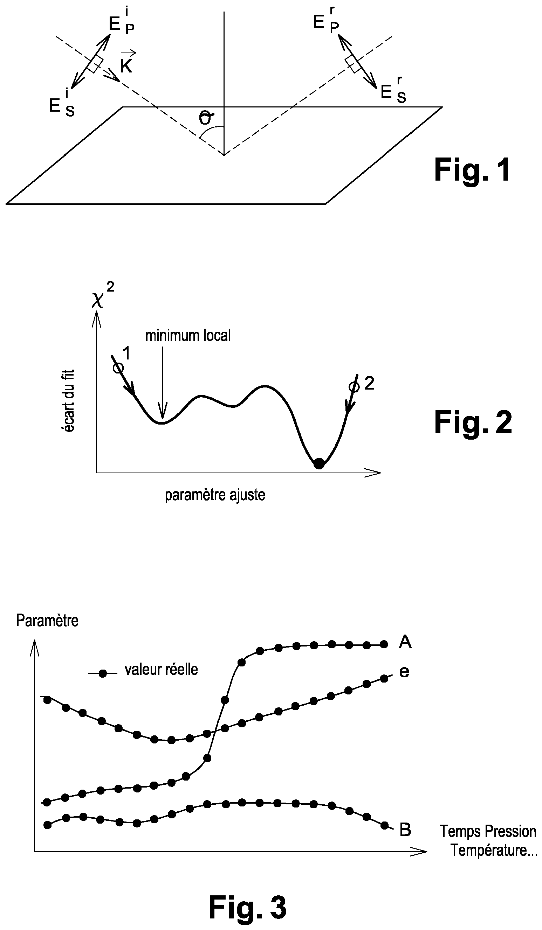

De façon connue, le principe de base de l'ellipsométrie est de mesurer le changement d'état de polarisation de la lumière induit par la réflexion sur une surface à analyser telle que la surface de films minces ou de substrats. La figure 1 illustre de façon générale ce principe, le vecteur d'onde **k** désignant la direction d'incidence de l'onde formant un angle $\theta$ avec la normale au plan de la surface à analyser. Le champ électrique incident **E$^\mathbf{i}$** peut se décomposer en une composante parallèle $\mathbf{E}_\mathbf{p}^\mathbf{i}$ et une composante perpendiculaire $\mathbf{E}_\mathbf{s}^\mathbf{i}$ au plan d'incidence. De même, le champ électrique réfléchi **E$^\mathbf{r}$** peut se décomposer en une composante parallèle $\mathbf{E}_\mathbf{p}^\mathbf{r}$ et une composante perpendiculaire $\mathbf{E}_\mathbf{s}^\mathbf{r}$ au plan d'incidence.

L'ellipsométrie consiste alors à mesurer la grandeur : $\rho = \tan(\psi)e^{j\Delta} = \dfrac{r_p}{r_s}$ (1), où $r_p$ et rs sont les rapports (respectivement pour les composantes p et s) des amplitudes des champs incidents et réfléchis :

$$r_p = \frac{E_p^r}{E_p^i} \text{ et } r_s = \frac{E_s^r}{E_s^i}.$$

La grandeur $\rho$ est non seulement dépendante de l'échantillon visé par le rayon lumineux mais aussi de la longueur d'onde $\lambda$.

La caractérisation de l'objet se fait en faisant varier la longueur d'onde $\lambda$ sur une plage connue.

Un système de mesure ellipsométrique fournit de manière générale un couple de signaux pour chaque longueur d'onde. Plusieurs couples sont couramment utilisées ; nous mentionnerons dans ce qui suit le couple ($\psi$, $\Delta$) où $\psi$ et $\Delta$ sont les grandeurs définies plus haut en référence à la relation (1). Le dispositif à ellipsométrie spectroscopique fournit par exemple deux signatures tan($\psi$) et cos($\Delta$) en fonction de la longueur d'onde $\lambda$.

L'ellipsométrie est une technique de caractérisation paramétrique ou indirecte en ce sens que l'on a recourt à un modèle pour ajuster les données expérimentales afin d'extraire les valeurs pertinentes sur l'échantillon (épaisseurs de couches, indices optiques,...).

Pour ce faire, des algorithmes de minimisation sont mis en oeuvre afin de faire converger les données théoriques issues du modèle vers les données expérimentales par l'ajustement d'un jeu de paramètres laissés libres durant l'analyse. Le procédé commence par la création d'un modèle représentant de la manière la plus précise possible l'échantillon à analyser. Les différentes couches de l'échantillon sont empilées et leurs épaisseurs renseignées avec des valeurs initiales. A chaque couche est ensuite affecté un indice optique complexe. Soit l'indice optique est connu par avance (i.e. tabulé), soit une fonction est utilisée pour modéliser l'indice en fonction de la longueur d'onde. Les différentes épaisseurs ainsi que les différents indices optiques modélisés constituent alors un jeu de $N_{par}$ paramètres qui seront ajustés, tous ou en partie, pendant la minimisation. Les mesures étant en général spectroscopiques, l'algorithme doit ajuster des courbes comprenant un nombre $N_{mes}$ de points de mesure.

L'écart entre le modèle et l'expérience est par exemple quantifié par l'écart quadratique moyen $\chi^2$ (ou « Mean Squared Error » MSE selon la terminologie anglaise) :

$$\chi^2 = \frac{1}{2N_{mes} - N_{par}} \sum_{i=1}^{N_{mes}} \left[\psi_{exp}(\lambda_i) - \psi_{theo}(\lambda_i)\right]^2 + \left[\Delta_{exp}(\lambda_i) - \Delta_{theo}(\lambda_i)\right]^2$$

La minimisation s'arrête lorsque que le $\chi^2$ atteint un minimum.

Un des problèmes couramment rencontrés en ellipsométrie est le piégeage dans un minimum local. Ce problème est illustré en figure 2 qui montre le $\chi^2$ en fonction de l'ajustement d'un paramètre. Selon la valeur initiale du paramètre (position 1 ou 2) on voit que l'algorithme de minimisation peut considérer le minimum local proche de la position 1 comme un minimum absolu et donc se laisser piéger dans ce minimum local. Dans ce cas, l'algorithme ne pourra pas converger vers la bonne valeur du paramètre (cercle plein).

Une solution connue à ce problème consiste à tester de multiples valeurs initiales pour chaque paramètre. Cette méthode est aussi désignée par la terminologie « multiguess », « grid search » ou « fit avec tests multiples ». Pour ce faire, on associe plusieurs valeurs initiales pour chaque paramètre et on lance autant de minimisations. On retient ensuite la minimisation ayant donné le meilleur $\chi^2$.

Le problème de cette méthode est qu'elle rallonge d'autant la procédure de modélisation. Ce temps de modélisation additionnel peut être acceptable pour une seule mesure mais peut devenir préjudiciable dans le cas de mesures multiples.

En ellipsométrie les paramètres variables pour chaque couche sont en général l'épaisseur e et l'indice optique n. L'indice optique n étant fonction de la longueur d'onde on utilise généralement des lois d'indice pour prendre en compte cette variation. Un exemple de loi d'indice à deux paramètres est donné ci-après :

$$n(\lambda) = A + \frac{B}{\lambda^2}$$

où A et B sont des paramètres définissant l'indice optique en fonction de la longueur d'onde $\lambda$.

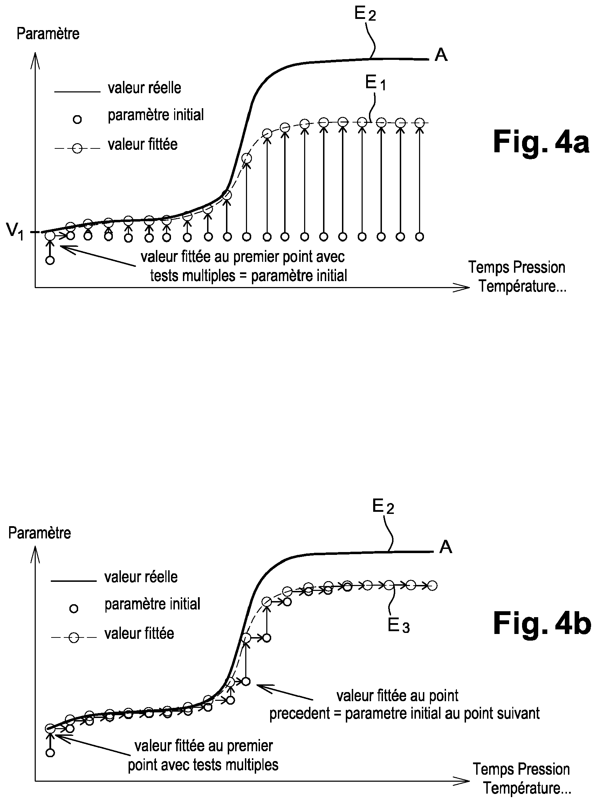

On peut dès lors considérer que les paramètres à ajuster pour chaque mesure (i.e. pour chaque valeur d'une grandeur expérimentale telle que par exemple le temps, la pression ou la température) sont les paramètres e, A et B. La variation des valeurs réelles des paramètres e, A et B au cours d'une expérience en fonction de la valeur de la grandeur expérimentale est illustrée en figure 3. Intéressons-nous par exemple au paramètre A étant entendu que ce qui suit s'applique à tous les paramètres du modèle. Lors de mesures multiples, le nombre de points d'expérience pouvant être très élevé, la procédure courante consiste à ajuster le premier point manuellement puis à laisser l'algorithme de minimisation ajuster les autres points de manière automatique et séquentielle. Le premier point est en général fixé avec des tests multiples pour éviter les problèmes de minima locaux évoqués plus haut. On conçoit aisément que ces tests multiples ne peuvent être réalisés pour chaque point sans éviter un temps de calcul trop important. De façon connue, deux approches sont classiquement utilisées pour gagner en temps de calcul en s'affranchissant de l'utilisation de tests multiples en chaque point de l'expérience. Ces deux approches sont illustrées en figures 4a et 4b.

Selon une première approche désignée par « Mode séquentiel 1 » illustrée en figure 4a, la valeur V1 du paramètre A obtenue au premier point est utilisée comme valeur initiale pour tous les autres points de l'expérience. En utilisant la valeur V1 comme valeur initiale systématique du paramètre A, on obtient une évolution E1 du paramètre A en fonction de la valeur d'une condition expérimentale telle que le temps, la pression, la température par exemple. L'évolution réelle E2 du paramètre A est également représentée à titre de comparaison.

Selon une seconde approche désignée par « Mode séquentiel 2 » illustrée en figure 4b, la valeur du paramètre A obtenue pour le point n-1 est utilisée comme valeur initiale pour le point n. On obtient une évolution E3 du paramètre A en fonction de la valeur d'une condition expérimentale telle que le temps, la pression, la température par exemple. L'évolution réelle E2 du paramètre A est également représentée à titre de comparaison.

Dans les deux cas (modes séquentiels 1 et 2), on observe que les courbes E1 et E3 ne coïncident plus avec la courbe E2 lorsque la valeur initiale du paramètre d'un point de l'expérience est trop éloignée de la valeur réelle. On note par ailleurs que l'écart entre E1 et E2 est plus important qu'entre E2 et E3 : ceci se comprend bien dans la mesure où la valeur initiale utilisée pour le Mode séquentiel 1 n'est jamais revue, ceci pouvant entraîner une divergence encore plus importante.

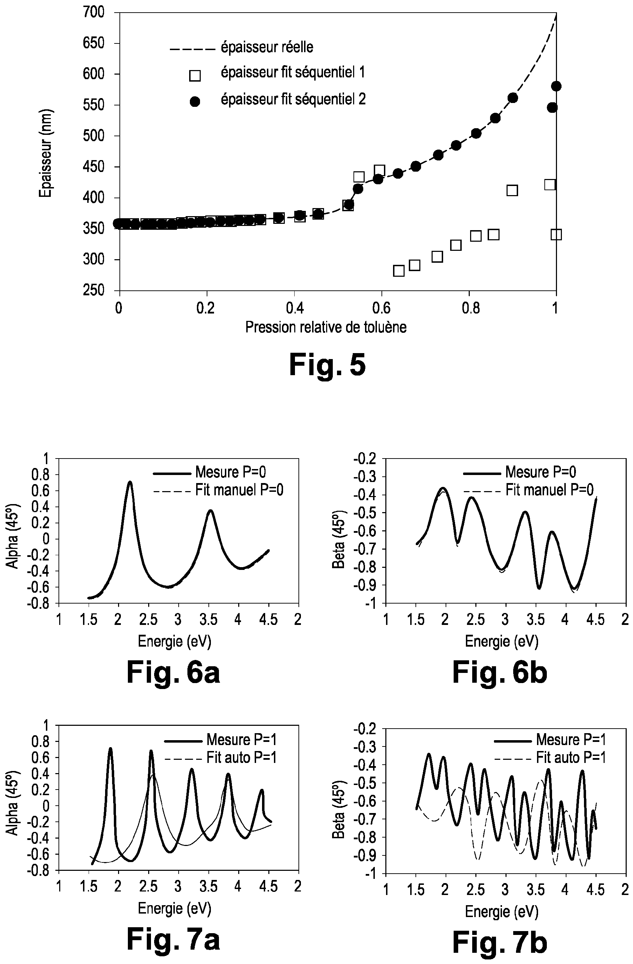

La divergence évoquée ci-dessus est illustrée en figure 5 dans le cas de l'évolution de l'épaisseur d'une couche de polymère soumise à une vapeur de toluène. Les différents points de mesure sont donc obtenus en fonction de l'évolution de la pression relative de toluène. Lors de l'expérience, la couche subit une expansion qui provoque une modification de son épaisseur (ici un doublement de son épaisseur). Le paramètre A considéré ici est donc l'épaisseur du film et la condition expérimentale est la pression relative de toluène. Les valeurs d'épaisseur obtenues par les méthodes précédentes (mode séquentiel 1 illustré par des points carrés et mode séquentiel 2 illustré par des cercles pleins) sont comparées à la valeur réelle d'épaisseur (courbe en pointillés). A partir d'une pression relative de toluène de 0,55 pour le mode séquentiel 1 et de 0,9 pour le mode séquentiel 2 on constate que les valeurs d'épaisseur ajustées (i.e. fittées) s'éloignent de la valeur réelle car le changement d'épaisseur (i.e. l'écart entre la valeur initiale et la valeur réelle) devient trop important pour que l'algorithme de minimisation converge vers la solution. Comme attendu le mode séquentiel 1 fonctionne moins bien que le mode séquentiel 2 puisque l'écart entre le paramètre initial et l'épaisseur réelle augmente plus vite avec le mode séquentiel 1 qu'avec le mode séquentiel 2.

Les figures 6a et 6b montrent les signatures expérimentales (courbe avec points ronds) $\alpha$ et $\beta$ à une pression relative de toluène égale à 0.

Les figures 6a et 6b montrent en outre les ajustements (fits) de ces mêmes signatures expérimentales (courbe en trait plein) $\alpha$ et $\beta$ obtenues en utilisant des tests multiples de valeurs initiales de l'épaisseur de façon à éliminer quasiment le risque d'erreur de tomber sur un minimum local, à cette même pression relative de toluène égale à 0.

Pour mémoire, dans le cas d'un ellipsomètre à analyseur tournant et dont le polariseur forme un angle égal à P avec le plan d'incidence, les signatures $\alpha$ et $\beta$ sont liées aux signatures $\tan(\psi)$ et $\cos(\Delta)$ mentionnées plus haut par la relation: $\tan \psi = |\tan P| * \{(1 + \alpha)/(1- \alpha)\}^{0.5}$ et $\cos \Delta = \beta(1 - \alpha^2)^{-0.5}$.

Grâce à l'utilisation des tests multiples, le fit permet d'obtenir un bon accord entre théorie et expérience validant l'épaisseur obtenue.

Les figures 7a et 7b montrent les signatures expérimentales (courbe avec points ronds) $\alpha$ et $\beta$ à une pression relative de toluène égale à 1 ainsi que les ajustements (fits) de ces mêmes signatures expérimentales (courbe en trait plein) $\alpha$ et $\beta$ obtenues en utilisant le mode séquentiel 1.

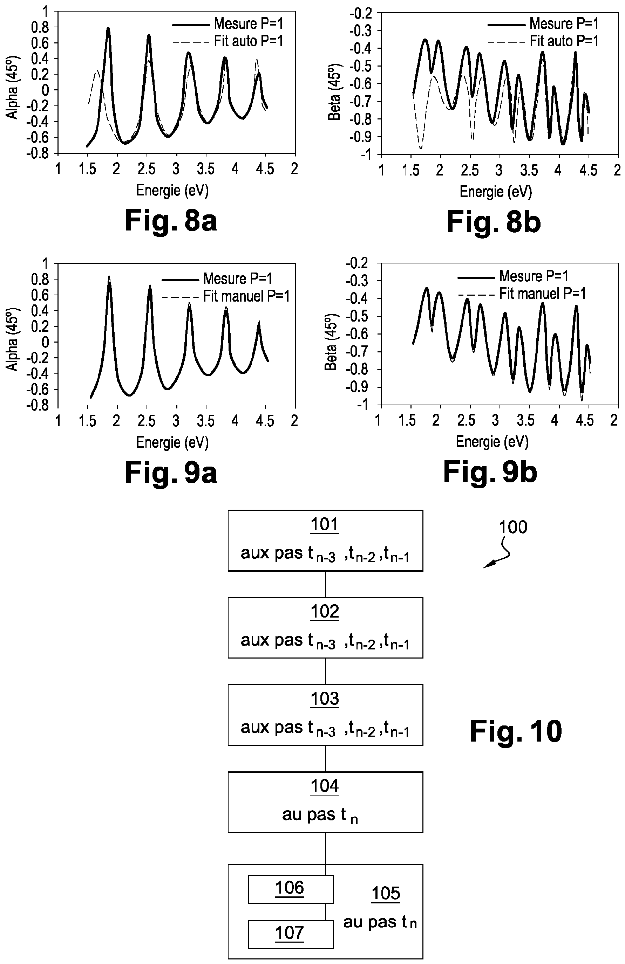

Les figures 8a et 8b montrent les signatures expérimentales (courbe avec points ronds) $\alpha$ et $\beta$ à une pression relative de toluène égale à 1 ainsi que les ajustements (fits) de ces mêmes signatures expérimentales (courbe en trait plein) $\alpha$ et $\beta$ obtenues en utilisant le mode séquentiel 2.

On constate sur les figures 7a, 7b, 8a et 8b que les ajustements automatiques correspondant aux modes séquentiels divergent fortement par rapport aux données expérimentales, le mode séquentiel 1 étant comme attendu moins bon que le mode séquentiel 2.

Dans ce cas seul un ajustement manuel avec tests multiples permet de retrouver la bonne valeur d'épaisseur. Ce résultat est d'ailleurs illustré aux figures 9a et 9b sur lesquelles sont représentées les signatures expérimentales (courbe avec points ronds) $\alpha$ et $\beta$ à une pression relative de toluène égale à 1 ainsi que les ajustements de ces mêmes signatures expérimentales (courbe en trait plein) $\alpha$ et $\beta$ obtenues en utilisant des tests multiples de valeurs initiales de l'épaisseur.

Dans ce contexte, la présente invention a pour but de fournir un procédé de caractérisation paramétrique d'un échantillon, telle que l'ellipsométrie, pour prédire les valeurs initiales d'au moins un paramètre d'un modèle afin d'optimiser les ajustements des données issues de mesures multiples obtenues pour différentes valeurs d'une grandeur expérimentale donnée, et permettant de s'affranchir de la détermination systématique avec tests multiples desdites valeurs initiales.

A cette fin, l'invention propose un procédé de caractérisation paramétrique d'un échantillon comportant, pour une valeur d'une grandeur expérimentale donnée, les étapes suivantes :

- une première étape de mesure de la réponse expérimentale de l'échantillon ;
- une deuxième étape de détermination d'une réponse théorique de la réponse de l'échantillon en ajustant au moins un paramètre de l'échantillon associé à une modélisation de la mesure de façon à rendre l'écart entre la réponse expérimentale et la réponse théorique inférieur ou égal à un seuil donné, une valeur initiale étant affectée au paramètre avant l'ajustement ;

les première et deuxième étapes étant répétées pour une pluralité de valeurs de la grandeur expérimentale ; selon l'invention, au-delà de la deuxième répétition des première et deuxième étapes, pour une valeur d'une grandeur expérimentale donnée, la valeur initiale du paramètre à ajuster est déterminée à partir d'au moins deux valeurs ajustées dudit paramètre obtenues lors des précédentes premières et deuxièmes étapes.

On entend par échantillon une structure utilisée ou fabriquée dans le domaine de la microélectronique.

La mesure de la réponse expérimentale de l'échantillon est réalisée par une technique de mesure utilisée en microélectronique telle que l'une des techniques suivantes : l'ellipsométrie, la scattérométrie, l'ellipsométrie porosimétrique, l'ellipsométrie à angle variable, l'ellipsométrie en température ou la réflectométrie spectroscopique ou goniométrique.

Le procédé selon l'invention peut également présenter une ou plusieurs des caractéristiques ci-dessous, considérées individuellement ou selon toutes les combinaisons techniquement possibles :

- la valeur initiale du paramètre à ajuster est déterminée à partir d'au moins deux valeurs ajustées dudit paramètre obtenues lors des précédentes premières et deuxièmes étapes à partir d'une extrapolation linéaire ;
- la valeur initiale du paramètre à ajuster est déterminée à partir d'au moins deux valeurs ajustées dudit paramètre obtenues lors des précédentes premières et deuxièmes étapes à partir d'une extrapolation polynomiale ;
- la valeur initiale du paramètre à ajuster est déterminée à partir d'une loi de variation théorique du paramètre passant par lesdites deux valeurs ajustées dudit paramètre obtenues lors des précédentes premières et deuxièmes étapes ;
- ladite loi de variation théorique est ajustée de manière itérative à chaque mesure correspondant à une valeur d'une grandeur expérimentale donnée ;
- le nombre de valeurs ajustées dudit paramètre servant à déterminer la valeur initiale des paramètres subséquents à ajuster varie au cours de l'expérience ;
- la deuxième étape de détermination d'une réponse théorique de la réponse de l'échantillon se fait en ajustant une pluralité de paramètres de l'échantillon associé à une modélisation de la mesure de façon à rendre l'écart entre la réponse expérimentale et la réponse théorique inférieur ou égal à un seuil donné, une valeur initiale étant affectée à chacun des paramètres de la pluralité de paramètres avant l'ajustement, le procédé étant caractérisé en ce que, au-delà de la deuxième répétition des première et deuxième étapes, pour une valeur d'une grandeur expérimentale donnée, la valeur initiale de chacun des paramètres de la pluralité de paramètres à ajuster est déterminée à partir d'au moins deux valeurs ajustées de chacun desdits paramètres obtenues lors des précédentes premières et deuxièmes étapes ;
- la deuxième étape de détermination d'une réponse théorique de la réponse de l'échantillon se fait en ajustant une pluralité de paramètres de l'échantillon associé à une modélisation de la mesure de façon à rendre l'écart entre la réponse expérimentale et la réponse théorique inférieur ou égal à un seuil donné, une valeur initiale étant affectée à chacun des paramètres de la pluralité de paramètres avant l'ajustement, le procédé étant caractérisé en ce que, au-delà de la deuxième répétition des première et deuxième étapes, pour une valeur d'une grandeur expérimentale donnée, la valeur initiale de chacun des paramètres de la pluralité de paramètres à ajuster est déterminée en prenant en compte la dépendance desdits paramètres entre eux ;
- la valeur initiale de chacun des paramètres de la pluralité de paramètres à ajuster est déterminée à partir de la résolution de l'équation suivante : V = F*U où V = [dY(k) dY(k-1) ... dY(k-p+1)] et U = [dX(k) dX(k-1) ... dX(k-p+1)] sont des matrices dont les colonnes sont constituées par les vecteurs dY(I) et dX(I) où dY(I)=Y(I)-Y(I-1) et dX(I)=X(I)-X(I-1) avec I variant de k à k-p et désignant l'indice de la valeur de la grandeur expérimentale, X(I) désignant le vecteur des m données acquises pour la valeur de la condition expérimentale I, Y(I) désignant le vecteur des p paramètres pour la valeur de la condition expérimentale I, et F étant une matrice (n, m) à déterminer ;
- on suppose que la matrice F est constante sur les p+1 valeurs de la grandeur expérimentale ;
- ledit procédé est appliqué à l'une des techniques suivantes : l'ellipsométrie, la scattérométrie, l'ellipsométrie porosimétrique, l'ellipsométrie à angle variable, l'ellipsométrie en température ou la réflectométrie spectroscopique ou goniométrique.

D'autres caractéristiques et avantages de l'invention ressortiront clairement de la description qui en est donnée ci-dessous, à titre indicatif et nullement limitatif, en référence aux figures annexées, parmi lesquelles :

- la figure 1 illustre schématiquement le principe de l'ellipsométrie spectroscopique;
- la figure 2 illustre le phénomène de piégeage dans un minimum local rencontré en ellipsométrie ;
- la figure 3 illustre la variation de valeurs réelles de paramètres en fonction de la valeur d'une grandeur expérimentale ;
- les figures 4a et 4b illustrent respectivement les deux approches par mode séquentiel 1 et 2 ;
- la figure 5 illustre l'évolution de l'épaisseur réelle d'une couche de polymère en fonction de la pression relative de vapeur de toluène ainsi que l'évolution de cette même épaisseur obtenue en utilisant les modes séquentiels 1 et 2 ;
- les figures 6a et 6b montrent les signatures expérimentales α et β dudit échantillon caractérisé à la figure 5 à une pression relative de toluène égale à 0 ainsi les ajustements de ces mêmes signatures expérimentales obtenues en utilisant des tests multiples ;

- les figures 7a et 7b montrent les signatures expérimentales α et β dudit échantillon caractérisé à la figure 5 à une pression relative de toluène égale à 1 ainsi que les ajustements de ces mêmes signatures en utilisant le mode séquentiel 1 ;
- les figures 8a et 8b montrent les signatures expérimentales α et β dudit échantillon caractérisé à la figure 5 à une pression relative de toluène égale à 1 ainsi que les ajustements de ces mêmes signatures en utilisant le mode séquentiel 2 ;
- les figures 9a et 9b montrent les signatures expérimentales α et β dudit échantillon caractérisé à la figure 5 à une pression relative de toluène égale à 1 ainsi les ajustements de ces mêmes signatures expérimentales obtenues en utilisant des tests multiples
- la figure 10 illustre schématiquement les différentes étapes du procédé selon l'invention ;
- la figure 11 illustre un premier mode de réalisation du procédé selon l'invention ;
- la figure 12 illustre un second mode de réalisation du procédé selon l'invention.

La figure 10 illustre schématiquement les différentes étapes du procédé 100 selon l'invention.

On notera que la technique de caractérisation utilisée pour illustrer l'invention est l'ellipsométrie spectroscopique dont le principe est représenté en figure 1, étant entendu que l'invention s'applique à toutes les techniques de caractérisation nécessitant la modélisation des données.

Comme mentionné plus haut, le principe de l'invention réside dans la détermination de la valeur initiale d'au moins un paramètre A utilisé qui peut être l'épaisseur de l'échantillon à analyser ou l'indice optique dans le cas d'une expérience où l'on réalise plusieurs mesures sur un même échantillon en faisant varier une grandeur expérimentale. Cette grandeur expérimentale peut être par exemple le temps, la pression ou la température.

Comme indiqué dans l'état de l'art, actuellement, la seule façon d'éviter le piégeage dans un minimum local en partant d'une valeur initiale trop éloignée de la valeur réelle, consiste à tester de multiples valeurs initiales de façon à trouver le plus petit écart entre le modèle et l'expérience et éviter ainsi de se laisser piéger dans un minimum local. Le procédé selon l'invention permet de s'affranchir de l'utilisation de ce test de plusieurs valeurs initiales.

Pour la mise en oeuvre de ce premier mode de réalisation, il convient de noter qu'il est nécessaire de disposer d'au moins deux valeurs du paramètre ajusté, par exemple en utilisant un test de multiples valeurs initiales pour les deux premiers points.

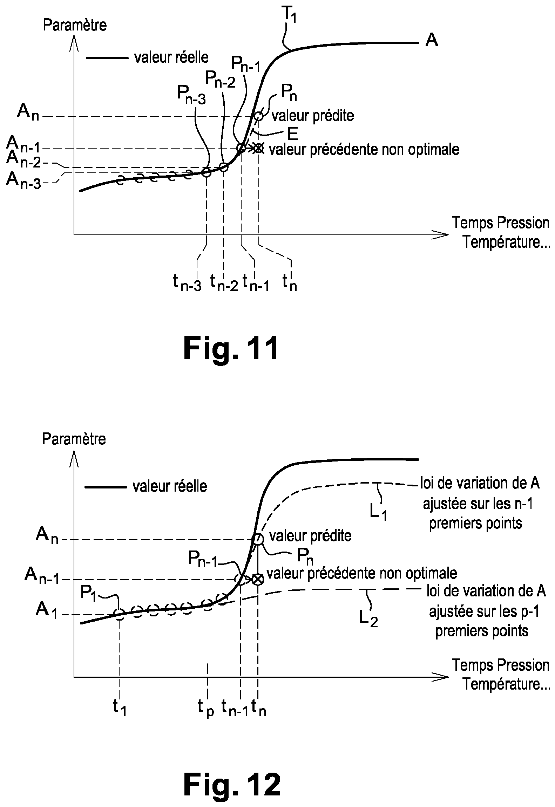

Prenons l'exemple de la figure 11 qui représente l'évolution réelle T1 du paramètre A.

Selon les trois premières étapes 101, 102 et 103 du procédé selon l'invention, on commence par déterminer aux moins deux valeurs de paramètres ajustés ; la figure 11 montre ici trois points de mesure $P_{n-3}$, $P_{n-2}$ et $P_{n-1}$ correspondant à des paramètres ajustés $A_{n-3}$, $A_{n-2}$ et $A_{n-1}$ pour trois valeurs $t_{n-3}$, $t_{n-2}$ et $t_{n-1}$ d'une grandeur expérimentale.

Pour chaque valeur de la grandeur expérimentale $t_{n-3}$, $t_{n-2}$ et $t_{n-1}$, on réalise une première étape 102 de mesure de la réponse expérimentale de l'échantillon et une deuxième étape 103 de détermination d'une réponse théorique de la réponse dudit échantillon en ajustant le paramètre $A_{n-3}$, $A_{n-2}$ et $A_{n-1}$ associé à une modélisation de la mesure de façon à rendre l'écart entre la réponse expérimentale et la réponse théorique inférieur ou égal à un seuil donné. Pour ce faire une valeur initiale est affectée au paramètre A avant l'ajustement. S'agissant des paramètres ajustés $A_{n-3}$, $A_{n-2}$ et $A_{n-1}$, la valeur initiale choisie pour déterminer chacun de ces paramètres a par exemple été déterminée selon une étape 101 en testant plusieurs valeurs initiales afin d'arriver à la meilleure minimisation de l'écart.

Pour mémoire, L'écart entre le modèle et l'expérience est par exemple quantifié par l'écart quadratique moyen $\chi^2$ (ou « Mean Squared Error » MSE selon la terminologie anglaise) :

$$\chi^2 = \frac{1}{2N_{mes} - N_{par}} \sum_{i=1}^{N_{mes}} \left[\psi_{exp}(\lambda_i) - \psi_{theo}(\lambda_i)\right]^2 + \left[\Delta_{exp}(\lambda_i) - \Delta_{theo}(\lambda_i)\right]^2$$

où $N_{par}$ désigne le nombre de paramètres qui seront ajustés (dont le paramètre A fait partie), tous ou en partie, pendant la minimisation et $N_{mes}$, le nombre de points de mesure sur l'échantillon pour une même valeur de la grandeur expérimentale.

La minimisation s'arrête lorsque que le $\chi^2$ atteint un minimum mais on réalise plusieurs minimisations avec différentes valeurs initiales de A de façon à obtenir le plus petit $\chi^2$. On constate que les valeurs initiales des paramètres ajustés $A_{n-3}$, $A_{n-2}$ et $A_{n-1}$ sont sur la courbe T1 ; cette précision est due au fait qu'on utilise des tests multiples.

Par souci de simplification nous n'avons représenté qu'une fois les étapes 101, 102 et 103, étant entendu que ces étapes sont répétées pour chaque valeur de la grandeur expérimentale $t_{n-3}$, $t_{n-2}$ et $t_{n-1}$.

Mais on comprend également que ces étapes de détermination par tests multiples de la valeur initiale sont très

7

consommatrices de temps de calcul.

Le procédé selon l'invention permet de s'affranchir de ces tests pour le point de mesure suivant obtenu pour la valeur $t_n$ de la grandeur expérimentale (désigné indifféremment par le terme pas $t_n$ de la grandeur expérimentale par la suite).

Comme précédemment, pour la valeur de la grandeur expérimentale $t_n$, on réalise une première étape 104 de mesure de la réponse expérimentale de l'échantillon et une deuxième étape 105 de détermination d'une réponse théorique de la réponse de l'échantillon en ajustant le paramètre A au pas $t_n$ associé à une modélisation de la mesure de façon à rendre l'écart entre la réponse expérimentale et la réponse théorique inférieur ou égal à un seuil donné. La question qui se pose alors est celle de la détermination de la valeur initiale du paramètre A pour effectuer cette étape d'ajustement sans réaliser des tests multiples. En d'autres termes, l'étape 105 comporte une première étape 106 de détermination de la valeur initiale du paramètre A puis une étape d'ajustement 107.

Pour l'étape 106, le procédé selon l'invention utilise la valeur des paramètres ajustés précédemment obtenus, en l'espèce $A_{n-3}$, $A_{n-2}$ et $A_{n-1}$, étant entendu que la mise en oeuvre du procédé selon l'invention pourrait se limiter à deux valeurs et que ces deux valeurs ne sont pas nécessairement celles qui précèdent immédiatement le pas $t_n$.

Selon ce mode de réalisation, les trois points adjacents $P_{n-3}$, $P_{n-2}$ et $P_{n-1}$ de l'expérience sont utilisés afin de prédire le point $P_n$ suivant par extrapolation. Cette extrapolation pourra être linéaire avec seulement deux points ou polynomiale avec un nombre de points supérieur ou égal à deux. La valeur de A ainsi prédite sert de valeur initiale pour fitter le point de l'expérience en question. Cette valeur étant dans de nombreux cas plus proche de la valeur réelle du paramètre, l'algorithme de minimisation pourra converger plus facilement. La figure 11 présente une extrapolation polynomiale E réalisée à partir des trois points $P_{n-3}$, $P_{n-2}$ et $P_{n-1}$ adjacents et permettant de prédire le point $P_n$ suivant. La valeur prédite $A_n$ de A est plus proche de la solution que la valeur $A_{n-1}$ obtenue au point précédent utilisée par le mode séquentiel 2. En d'autres termes, selon ce premier mode de réalisation on va prédire (i.e. extrapoler) la valeur $A_n$ en prenant un polynôme de type $P(x) = ax^3 + bx^2 + cx + d$ (ou un polynôme d'ordre supérieur à 3) et en faisant passer ce polynôme par les 4 points $P_n$, $P_{n-3}$, $P_{n-2}$ et $P_{n-1}$.

On notera que l'extrapolation peut être adaptative en ce sens que le nombre de points utilisées pour extrapoler un point subséquent pourra varier au cours de l'expérience. En d'autres termes, on pourra prendre davantage de points (ou moins de points) pour prédire la valeur initiale $A_{n+1}$ du point $P_{n+1}$ suivant correspondant au pas $t_{n+1}$.

Nous avons dans ce qui précède obtenu la valeur initiale $A_n$ en utilisant une extrapolation de type polynomial ou linéaire. Un second mode de réalisation de l'invention est illustré en figure 12. Dans certains cas, la loi de variation théorique du paramètre A est connue. Par exemple pour les isothermes d'adsorption de gaz dans des couches poreuses, l'équation de Dubinin-Astakhov :

$$V = V_0 e^{-\left(\frac{RT\ln\frac{P_0}{P}}{E}\right)^n}$$

donne le volume de gaz adsorbé en fonction de la pression P, de la pression de vapeur saturante $P_0$, de la température T, de la constante des gaz parfaits R, de l'énergie d'adsorption E et de n désignant un facteur d'hétérogénéité. L'indice optique de la couche poreuse, qui dépend de la quantité de gaz adsorbé, suit la même équation. Un paramètre de la loi d'indice, par exemple A pour une loi de Cauchy, peut donc être décrit par ce genre de loi au cours de l'adsorption.

Selon ce second mode de réalisation, pour l'étape 106, le procédé selon l'invention utilise la loi de variation du paramètre A précédemment définie et les n-1 premiers points $P_1$ à $P_{n-1}$ de façon à ajuster la loi de variation L1 sur les n-1 premiers points $P_1$ à $P_{n-1}$ et à déduire le point $P_n$ au pas $t_n$ suivant sur la courbe L1. Ainsi, dans ce cas, avant de fitter le point d'expérience n, une loi de variation théorique du paramètre A est ajustée sur les n-1 points précédents afin d'estimer la valeur du point n. Comme pour le premier mode de réalisation, la valeur prédite $A_n$ de A est plus proche de la solution que la valeur $A_{n-1}$ obtenue au point précédent selon le mode séquentiel 2.

A partir de cette valeur estimée du paramètre prise comme valeur initiale pour la valeur $t_n$ de la grandeur expérimentale, selon l'étape 107, l'algorithme de minimisation ajuste le modèle aux données expérimentales du point n.

On notera que la loi de variation du paramètre A est ajustée de manière itérative à chaque point de l'expérience. Ainsi, au fur et à mesure, la loi de variation de A se rapproche de la valeur réelle de A puisqu'il y a de plus en plus de points pour définir cette courbe. A titre d'illustration, la loi de variation L1 obtenue pour n points est plus proche de la valeur réelle de A que la loi de variation L2 obtenue pour p points avec p (cf. pas de temps $t_p$ représenté sur la figure 12) strictement inférieur à n.

Selon les premier et second modes de réalisation décrits plus haut, on ne prend pas en considération l'interdépendance des paramètres entre eux (par exemple du paramètre d'indice optique et du paramètre d'épaisseur) ni de l'interdépendance des nouvelles valeurs des paramètres et des nouvelles valeurs des données expérimentales. Prendre en compte chaque paramètre individuellement peut entraîner un risque d'erreur car les paramètres peuvent se corréler entre eux.

Le troisième mode de réalisation du procédé selon l'invention vise à proposer une approche globale prenant en compte tout ou partie des paramètres et des données expérimentales en les stockant sous forme de vecteurs.

Si on note X(k) le vecteur des données acquises au temps k (i.e. l'étape 102 au pas de temps k) et Y(k) le vecteur des paramètres à l'instant k (i.e. le vecteur de paramètres ajustés durant les étapes 103 et 104 au pas de temps k), une approximation linéaire de la dépendance des Y(k) en fonction des X(k) peut s'écrire :

$$Y(k)-Y(k-1) = F(k)\,[X(k)-X(k-1)]\ (\text{relation } 1)$$

où X(k-1) désigne le vecteur des données acquises au temps k-1, Y(k-1) le vecteur des paramètres à l'instant k-1 et F(k) est la matrice dérivée des variations des paramètres en fonction des données X(k) à l'instant k.

Physiquement, les paramètres et les données sont liés de façon non linéaire mais on peut faire l'hypothèse que les paramètres et les données sont liés linéairement localement à un instant k donné. En d'autres termes, la relation 1 peut s'écrire sous la forme dérivée suivante :

$$dY(k) = F(k)\,dX(k)$$

avec la notation dY(k) = Y(k)-Y(k-1) et dX(k) = X(k)-X(k-1)

Comme déjà mentionné, notre illustration porte ici sur une variation temporelle de la grandeur expérimentale, étant entendu que le procédé s'applique à d'autres grandeurs expérimentales telles que la pression ou la température.

Si le nombre de données à l'instant k est m et le nombre de paramètres est n, alors la matrice F(k) est une matrice (n, m). Pour déterminer cette matrice, il faut disposer de plusieurs vecteurs Y, X pris aux temps inférieurs ou égaux à k sachant que l'on veut extrapoler (étape 106 consistant à déterminer les valeurs initiales des paramètres) pour l'instant (k+1).

Si l'on dispose de plusieurs temps précédents, par exemple k, k-1, ..., k-p, on doit résoudre le système :

$$dY(l) = F*dX(l) \text{ pour } l \text{ égal à } k, k-1, k-2, \ldots, k-p, \text{ c'est-à-dire}$$

$$V = F*U \text{ où } V = [dY(k)\ dY(k-1)\ \ldots\ dY(k-p+1)] \text{ et } U = [dX(k)\ dX(k-1)\ \ldots$$

dX(k-p+1)] sont des matrices dont les colonnes sont constituées par les dY(l) et dX(l) respectivement, F étant la matrice (n, m) à déterminer.

F correspond à une matrice de transfert que nous allons supposer constante sur les p+1 points de l'expérience.

Si la matrice X est carrée et inversible, on peut aisément déterminer F par la relation : $F=V*U^{-1}$.

Dans le cas d'une matrice X qui n'est pas inversible, on peut chercher à minimiser la norme $\|V-F*U\|^2$.

En faisant l'hypothèse d'un bruit de mesure gaussien ou sensiblement gaussien, une solution connue à ce problème est donnée par la relation :

$$F=V*U^{+}$$

où $U^{+}$ représente la matrice pseudo-inverse de U.

La matrice pseudo-inverse $X^{+}$ peut s'écrire de la façon suivante :

$$U^{+}= (U^T)*(U*U^T)^{-1}$$

où $U^T$ représente la transposition de la matrice U et $(U*U^T)^{-1}$ est l'inverse de la matrice $U*U^T$.

Connaissant F, on peut alors déterminer par extrapolation le vecteur de paramètres initiaux Y(k+1) au temps k+1 par la relation : Y(k+1) = F*(X(k+1)-X(k)) + Y(k).

Ce vecteur de paramètres Y(k+1) servira de vecteurs de valeurs initiales des paramètres A pour l'étape d'ajustement 107 au pas k+1.

A partir de l'ensemble des temps précédents k, k-1, k-p la matrice F est donc calculée. Pour correctement évaluer la matrice de dérivée F, il est souhaitable que le nombre de pas de temps utilisés pour sa détermination soit supérieur ou égal aux nombre de mesures faites simultanément à chaque instant I. Ainsi si à chaque instant on mesure alpha et beta (i.e. deux données), il faudra retenir au moins les pas de temps k et k-1 (deux pas de temps). D'autre part, le modèle suppose l'invariance de F au cours du temps ce qui n'est qu'une approximation. Il est donc préférable que les échantillons de temps utilisés soient les plus proches du temps à extrapoler (i.e. k et k-1 plutôt que k-2 et k-3).

Si l'hypothèse d'invariance de F dans le temps est vérifiée, alors il est, au contraire, préférable d'utiliser beaucoup de pas de temps pour s'affranchir des problèmes de bruit de chaque mesure.

Bien entendu, l'invention n'est pas limitée aux modes de réalisation qui viennent d'être décrits.

Notamment, même si l'invention a été plus spécifiquement décrite dans le cas d'une approche utilisant l'ellipsométrie classique, l'invention s'applique à tout type de méthode paramétrique optique ou non, par exemple la scattérométrie, l'ellipsométrie porosimétrique, l'ellipsométrie à angle variable (dite aussi goniométrique ou θ-2θ), l'ellipsométrie en température ou la réflectométrie (spectroscopique ou goniométrique).

## Revendications

1. Procédé (100) de caractérisation paramétrique d'un échantillon comportant, pour une valeur d'une grandeur expérimentale donnée (P, T, t), les étapes suivantes :

   - une première étape (102) de mesure par une technique de mesure utilisée en microélectronique de la réponse expérimentale de l'échantillon ;
   - une deuxième étape (103) de détermination d'une réponse théorique de la réponse de l'échantillon en ajustant au moins un paramètre de l'échantillon associé à une modélisation de la mesure de façon à rendre l'écart entre la réponse expérimentale et la réponse théorique inférieur ou égal à un seuil donné, une valeur initiale étant affectée (101) au paramètre avant l'ajustement ;

   les première et deuxième étapes étant répétées pour une pluralité de valeurs de la grandeur expérimentale, le procédé étant **caractérisé en ce que**, au-delà de la deuxième répétition des première et deuxième étapes, pour une valeur d'une grandeur expérimentale donnée, la valeur initiale du paramètre à ajuster est déterminée (106) à partir d'au moins deux valeurs ajustées dudit paramètre obtenues lors des précédentes premières et deuxièmes étapes.

2. Procédé (100) selon la revendication précédente **caractérisé en ce que** la valeur initiale du paramètre à ajuster est déterminée à partir d'au moins deux valeurs ajustées dudit paramètre obtenues lors des précédentes premières et deuxièmes étapes à partir d'une extrapolation linéaire.

3. Procédé (100) selon l'une des revendications précédentes **caractérisé en ce que** la valeur initiale du paramètre à ajuster est déterminée à partir d'au moins deux valeurs ajustées dudit paramètre obtenues lors des précédentes premières et deuxièmes étapes à partir d'une extrapolation polynomiale.

4. Procédé (100) selon la revendication 1 **caractérisé en ce que** la valeur initiale du paramètre à ajuster est déterminée à partir d'une loi de variation théorique du paramètre passant par lesdites deux valeurs ajustées dudit paramètre obtenues lors des précédentes premières et deuxièmes étapes.

5. Procédé (100) selon la revendication précédente **caractérisé en ce que** ladite loi de variation théorique est ajustée de manière itérative à chaque mesure correspondant à une valeur d'une grandeur expérimentale donnée.

6. Procédé (100) selon l'une des revendications précédentes **caractérisé en ce que** le nombre de valeurs ajustées dudit paramètre servant à déterminer la valeur initiale des paramètres subséquents à ajuster varie au cours de l'expérience.

7. Procédé (100) selon l'une des revendications précédentes **caractérisé en ce que** la deuxième étape de détermination d'une réponse théorique de la réponse de l'échantillon se fait en ajustant une pluralité de paramètres de l'échantillon associé à une modélisation de la mesure de façon à rendre l'écart entre la réponse expérimentale et la réponse théorique inférieur ou égal à un seuil donné, une valeur initiale étant affectée à chacun des paramètres de la pluralité de paramètres avant l'ajustement,
le procédé étant **caractérisé en ce que**, au-delà de la deuxième répétition des première et deuxième étapes, pour une valeur d'une grandeur expérimentale donnée, la valeur initiale de chacun des paramètres de la pluralité de paramètres à ajuster est déterminée à partir d'au moins deux valeurs ajustées de chacun desdits paramètres obtenues lors des précédentes premières et deuxièmes étapes.

8. Procédé (100) selon la revendication 1 **caractérisé en ce que** la deuxième étape de détermination d'une réponse théorique de la réponse de l'échantillon se fait en ajustant une pluralité de paramètres de l'échantillon associé à une modélisation de la mesure de façon à rendre l'écart entre la réponse expérimentale et la réponse théorique inférieur ou égal à un seuil donné, une valeur initiale étant affectée à chacun des paramètres de la pluralité de paramètres avant l'ajustement,
le procédé étant **caractérisé en ce que**, au-delà de la deuxième répétition des première et deuxième étapes, pour une valeur d'une grandeur expérimentale donnée, la valeur initiale de chacun des paramètres de la pluralité de paramètres à ajuster est déterminée en prenant en compte la dépendance desdits paramètres entre eux.

9. Procédé (100) selon la revendication 8 **caractérisé en ce que** la valeur initiale de chacun des paramètres de la pluralité de paramètres à ajuster est déterminée à partir de la résolution de l'équation suivante : $V = F*U$ où $V = [dY(k)\ dY(k-1)\ ...\ dY(k-p+1)]$ et $U = [dX(k)\ dX(k-1)\ ...\ dX(k-p+1)]$ sont des matrices dont les colonnes sont constituées par les vecteurs $dY(I)$ et $dX(I)$ où $dY(I)=Y(I)-Y(I-1)$ et $dX(I)=X(I)-X(I-1)$ avec I variant de k à k-p et désignant l'indice de la valeur de la grandeur expérimentale, $X(I)$ désignant le vecteur des m données acquises pour la valeur de la condition expérimentale I, $Y(I)$ désignant le vecteur des p paramètres pour la valeur de la condition expérimentale I, et F étant une matrice (n, m) à déterminer.

10. Procédé (100) selon la revendication 9 **caractérisé en ce que** l'on suppose que la matrice F est constante sur les p+1 valeurs de la grandeur expérimentale.

**Fig. 1**

**Fig. 2**

**Fig. 3**

Fig. 4a

Paramètre

valeur réelle
o  paramètre initial
—o— valeur fittée

valeur fittée au premier point avec
tests multiples = paramètre initial

Temps Pression
Température...

Fig. 4b

Paramètre

valeur réelle
o  paramètre initial
—o— valeur fittée

valeur fittée au point
precedent = parametre initial au point suivant

valeur fittée au premier
point avec tests multiples

Temps Pression
Température...

**Fig. 5**

**Fig. 6a**

**Fig. 6b**

**Fig. 7a**

**Fig. 7b**

Fig. 8a

Fig. 8b

Fig. 9a

Fig. 9b

Fig. 10

EP 3 273 360 A1

Fig. 11

Fig. 12

16

Europäisches
Patentamt

European
Patent Office

Office européen
des brevets

# RAPPORT DE RECHERCHE EUROPEENNE

Numéro de la demande

EP 17 18 1597

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 2 278 299 A1 (COMMISSARIAT ENERGIE ATOMIQUE [FR]; CENTRE NAT RECH SCIENT [FR]) 26 janvier 2011 (2011-01-26) * abrégé; figure 10 * ----- | 1-10 | INV. G06F17/17 G01N21/00 |
| Y | Baoline Chen: "Numerical Solution of an Endogenous Growth Model with Threshold Learning", Computational Economics, 1 juin 1999 (1999-06-01), pages 227-247, XP055361602, Dordrecht DOI: 10.1023/A:1008699809511 Extrait de l'Internet: URL:http://rd.springer.com/content/pdf/10.1023/A:1008699809511.pdf [extrait le 2017-04-05] * sec. 3.1 et 3.5 * ----- | 1-10 | |

| | DOMAINES TECHNIQUES RECHERCHES (IPC) |
|---|---|
| | G06F G01N |

Le présent rapport a été établi pour toutes les revendications

| Lieu de la recherche | Date d'achèvement de la recherche | Examinateur |
|---|---|---|
| Berlin | 26 juillet 2017 | Virnik, Elena |

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 17 18 1597

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-07-2017

| Document brevet cité au rapport de recherche | Date de publication | Membre(s) de la famille de brevet(s) | Date de publication |
|---|---|---|---|
| EP 2278299      A1 | 26-01-2011 | AT      549614  T | 15-03-2012 |
|  |  | EP     2278299  A1 | 26-01-2011 |
|  |  | FR     2948192  A1 | 21-01-2011 |
|  |  | JP   2011039044  A | 24-02-2011 |
|  |  | US   2011019207  A1 | 27-01-2011 |

EPO FORM P0460

Pour tout renseignement concernant cette annexe : voir Journal Officiel de l'Office européen des brevets, No.12/82